# EUROPEAN PATENT SPECIFICATION

(11) **EP 0 736 593 B1**
(45) Date of publication and mention of the grant of the patent: **11.07.2001**
(21) Application number: 96301648.0
(22) Date of filing: 11.03.1996
(51) Int. Cl.: C11C 3/14, C07F 7/08, B01J 23/46

(54) **Method of conjugating double bonds in organic compounds**
Verfahren zur Konjugierung der Doppelbindungen in organischen Verbindungen
Procédé de conjugaison des doubles liaisons de composés organiques

(30) Priority: 10.03.1995 US 402109
(43) Date of publication of application: 09.10.1996
(73) Proprietor: ARCHER DANIELS MIDLAND COMPANY, Decatur, Illinois 62526 (US)
(72) Inventor: Sleeter, Ronald T., Decatur, Illinois 62526 (US)
(74) Representative: Bond, Bentley George

(56) References cited:
- EP-A- 0 040 577
- EP-A- 0 160 544
- DE-A- 2 049 937
- JOURNAL OF MOLECULAR CATALYSIS, vol. 38, no. 3, 1986, pages 315-321, XP002006829 AMITABHA BASU ET AL.: "Metal clusters in homogeneous catalysis: isomerization of methyl linoleate"
- REVUE FRANCAISE DES CORPS GRAS, vol. 31, no. 7-8, 1984, PARIS FR, pages 287-291, XP002006830 G. CECCHI ET AL.: "Catalyse par les métaux précieux en lipochimie. VI - Effets de l'acide formique sur la conjugaison du linoléate de méthyle catalysée par Ru/C"
- JOURNAL OF MOLECULAR CATALYSIS, vol. 52, no. 2, 1989, pages 305-309, XP002006831 C.S. NARASIMHAN ET AL.: "Isomerization of methyl linoleate on ruthenium(III)-alkoxide complex"

## Description

This invention relates to new and improved drying oils and more particularly to such oils having better drying qualities and still more particularly to such oils which have such superior drying qualities as to enable them to be capable of being used as part of an improved bonding system for various wood and fiber products.

"Drying oils" are triglycerides which have the ability to dry or polymerize. Some examples of drying oils are: linseed, fish, soybean, tall, tung, castor and oiticica. Drying oils are used in paints, varnishes, floor coverings, inks, resins, caulking, oil cloths, etc. In general, these oils are composed of fatty acids which have a large number of double bonds. The drying ability of these oils is related to their Iodine Value ("IV"), which is a quantitative measure of number of double bonds. they contain. Oils in the range of 195-170 IV are relatively fast-drying. Oils in the range of 140-120 IV are semi-drying, and oils with IV's under 120 are non-drying.

The double bonds of most common vegetable oils are separated by a methylene group, and these oils therefore commonly referred to as being "methylene interrupted". Although these oils certainly have nutritional benefits, the methylene interruption limits their usefulness in industrial polymerization applications for coatings and such where modern assembly line methods and high speed processes have created a demand for fast-drying.

For these vegetable oils to be useful industrially, they need to be made to polymerize rapidly. Polymerization is greatly assisted if the double bonds are adjacent to one another or "conjugated". Over the years, many methods have been developed to produce conjugated oils by shifting the methylene interruption between the double bonds. Unfortunately, only limited commercial amounts of such modified vegetable oils have been produced using these methods due to their expense and other limitations.

Additionally, insofar as is known, drying oils generally have not played an important role as part of bonding systems. The present invention, however, converts vegetable oils into a form with a host of formerly unknown and unanticipated uses including use in bonding systems, especially, but not exclusively, for bonding various wood, wood chip, fiber and composite materials. More particularly, these modified vegetable oils have been found to be useful in making new and improved oriented strand board (OSB), particle board, plywood and the like.

While wood is one of the world's most significant renewable resources, the supply of large diameter trees is decreasing. As a result, the production of OSB and other wood composites is becoming extremely important both for cost and for environmental reasons. By way of comparison, plywood manufacture utilizes only about 60-70% of the tree stem. OSB can utilize up to 90%.

Wood composite products require adhesives as bonding systems. Regardless of the composite, the wood fibers, chips and fillers are usually bonded with phenolic resins, polymeric methylene diphenyl diisocyanates, protein glues, etc. More particularly, when OSB or particle board is made, the wood and an adhesive are placed in a press which applies pressure for a minute or two, with a five and a half minute period usually considered the maximum.

This invention produces conjugated drying oils which are synergistic coadhesives when used as a portion of a bonding system with the phenolic resins, diisocyanates, etc. They impart substantial benefit producing boards nearly double the strength of boards prepared without them. A rapid and economical process for the conjugation of oils, then, is desirable to impart better drying characteristics to common vegetable oils and to produce conjugated oils capable of improving the bonding of resins for wood products and the like.

Tung oil is a naturally conjugated oil and is used as a premium oil for fine wood finishes. However, it is expensive, and it is imported and has had an unreliable supply from year to year. It would be most advantageous to modify commercially readily available vegetable oils and convert them to conjugated oils.

Several candidates should be considered to replace tung oil. Linseed oil is the first choice due to its high levels of unsaturation (IV=155-205), especially of linolenic acid which generally exceeds 55% by weight. Linseed has well-known agronomic properties and has been grown in the past in large quantities. Soybean oil and safflower oil are two other candidates. However, they are less desirable because they have less total unsaturation with most of the unsaturated fatty acids being linoleic (IV=120-141 and 145 respectively).

Prior methods for the conjugation of double bonds yield very low conversions requiring long reaction times at high temperatures. This then favors subsequent polymerization of the conjugated products being formed thereby lowering the yield. The conjugation of the oil proceeds through an optimum yield of conversion at which point polymerization outpaces conjugation and the amount of conjugated oil actually decreases as the reaction proceeds. This ultimately produces an oil of such high viscosity as to render it useless for many applications. Some of these procedures producing low levels of conjugation are represented in the following list:

| Catalyst | General Yield | Reference |
|---|---|---|
| Nickel/Carbon | 34% | Ind. and Eng. Chem. 997-1002 (1946), S.B. Radlove, H.M. Teeter, W.H. Bonds, J.C. Cowan and J.P. Kass |
| Primary Alcohols | 19% | U.S. Patent 2,242,230 (May 20, 1941), George Burr |
| Aliphatic Organic Iodides | 30% | U.S. Patent 2,422,112 (November 12, 1946), Anderson Ralston and Otto Turinsky |
| Inorganic Iodides | 24% | U.S. Patent 2,411,113 (November 12, 1946), Anderson Ralston and Otto Turinsky |
| SO₂- | 11% | U.S. Patent 3,278,567 (October 11, 1966), Walter E. Ratjen, Lowell O. Cummings and John A. Kneeland |
| Sulfur Organics (Aryl Thiols) | 18% | U.S. Patent 3,784,537 (January 8, 1974); U.S. Patent 3,925,342 (December 9, 1975), Roland Peirre Franz Scharrer |
| Amine Hydroiodides | 37% | U.S. Patent 2,411,111 (November 12, 1946), Anderson W. Ralston and Otto Turinsky |
| SOCl₂ (of esters) | Small | Yukagaku 1970, 153-7 Hisako Shiina and Tetsutaro Hashimoto |
| Anthraquinone | 19% | JAOCS 237-243 (1948), L.B. Falkenburg, Wm. DeJong, D.P. Handke and S.B. Radlove |
| Alkali (of esters) | 50% Range | G.S.R. Sastry, B.G.K. Murthy, J.S. Aggarwal, Paint Manufacturing 32-4 (1970) |
| Alkali (K-T-Butoxide) | 38% | B.S. Sreenivasan and J.B. Brown, JAOCS 35 89-92 (1958) |
| Iodine | 40% | Yukagaku 28 600-604 (1979), Yasuhiko Kubota and Tetsutaro Hashimoto |
| Hydrosilicones with metal catalyst | 60% | U.S. Patent 3,449,384, Hans Ender |
| Dehydration of Caster Oil | 50% + | Ind. Eng. Chem., Prod. Res. Dev., 16 107-111 (1977) |

There are several methods which have produced high levels of conjugation without concomitant polymerization. These reactions are fairly efficient and produce highly conjugated products with significantly less polymerization. Thus, these oils are quite fluid. Some of these methods are described in the following documents:

| Catalyst | General Yield | Reference |
|---|---|---|
| Chromium Carbonyls | 45-65% | JAOCS 47,33-36 (1969), E.N. Frankel |
| Iron Pentacarbonyl | 95% | JAOCS 44, 37-9 (1967), U.S. Patent 3,373,175, U.S. Patent 3,392,177, E.N. Frankel |
| Rhodium/Iridium organometallic complexes | 50% + | European Patent EP 0 160 544 A. Basu, Sumit Bhaduri and T.K.G. Kasar |
| Ruthenium on Carbon | 80% + | European Patent EP 0 040 577, Georges Cecchi and Euqene Ucciani |
| Rhodium/Ruthenium organochlorin complexes | 80% + | German Patent 2 049 937 Helmut Singer, Werner Stein and Herbert Lepper |

Most of the prior methods described in the foregoing documents have significant drawbacks. The carbonyls are highly toxic and very difficult to work with. Iron pentacarbonyl is flammable at room temperature. The reaction requires a high pressure vessel capable of withstanding 1500 PSI and 200° C. Recovery of the iron pentacarbonyl is very slow and significant loss of unrecovered catalyst into the oil makes it'an uneconomical process. Organorhodium and organo-iridium catalysts are very expensive beginning with the purchase price of the metal prior to the added expense of synthesis of the organocomplex. These reactions require 12 hour reaction times and substantial amounts of catalyst. Although the catalyst has been reported to be recovered in good yield by using a non-polar solvent, this comes at an additional processing cost, along with the danger of the use of flammable solvents. Furthermore, the amount of residual catalyst remaining in the oil following the recovery step *has* not been determined, but it is thought to be too high to make the process economical.

The ruthenium on carbon as practiced by Cecchi and Ucciani in the above European Patent Application No. 0 040 577, is not capable of reuse as claimed. It is critical for a process of this nature to be capable of numerous reuses due to the expense of the catalyst. Catalyst activity for used catalyst of this patent is reduced by a factor of one-half for every reuse, when used for conjugation of linseed oil. Typial conversions start at 85% conjugation for the first reaction, about 40% conversion for the second reaction with the catalyst used once and about 20% conversion for the third reaction with the catalyst used twice. Therefore, the Cecchi-Ucciani procedure leads to a prohibitively high cost to make conjugated oil due to the loss of catalyst activity. Thus, the use of ruthenium on carbon alone is not a viable process.

Use of rhodium and ruthenium organochlorines as catalysts (German Patent 2 049 937) converts linseed oil to high levels of conjugation (>60%). However, nearly 0.3% ruthenium is used as a 22% component in an organochlorine complex. The reaction temperature is governed by the decomposition temperature of the complex. One example may be given on catalyst reuse. In this case, the product, soybean oil fatty acids, was distilled from the catalyst. This would not be possible with triglycerides. Thus, with this large amount of ruthenium, if the catalyst cannot be recovered, the process would be prohibitively expensive.

One other study, by A. Basu, S. Bhaduri and K.R. Sharma, "Metal clusters in Homogeneous Catalysis: Isomerization of Methyl Linoleate", Adv. Catal. (Proc. Natl. Symp. Catal.) 7th, 1985, describes the reaction of tetracarbonyl triruthenium and other compounds from a reaction standpoint. The catalysts are added at a nearly equivalent basis. Using the teachings of this work in a commercial process to manufacture conjugated oils would result in a level of consumption of ruthenium which would be intolerably high and prohibitively expensive.

According to the present invention, there is provided a catalytic process for conjugating methylene-interrupted double bonds in an organic compound, the process comprising:
solubilizing ruthenium in a methylene-interrupted compound to a level which provides a homogeneous catalyst; and
reacting the methylene-interrupted organic compound, in the absence of oxygen and in the presence of an acid, with said homogeneous catalyst;
wherein the ruthenium used to provide said homogeneous catalyst is in the form of an organo-ruthenium complex, or a ruthenium salt; and
wherein the level of ruthenium as metal is at least 5 ppm and not more than 200 ppm, based on the weight of the organic compound,
and the amount of acid is not more than 4% by weight, based on the weight of the organic compound.

I have discovered that most organo-ruthenium complexes, ruthenium salts and, to a limited degree, ruthenium covalent compounds in which ruthenium is in any of its several valence or oxidation states, catalyze the conjugation of methylene interrupted double bonds in common vegetable oils. Most compounds of ruthenium which can be solubilized into the substrate (oils with high Iodine Values composed of methylene interrupted double bonds) are or form active homogeneous catalysts to conjugate double bonds. Indeed, organic compounds in general which have methylene interrupted double bonds can be conjugated with the process of this invention.

I have also found that the successful use of these forms of ruthenium depends upon the presence of an acid during the reaction. The preferred acid is formic acid. Some other acids such as organic acids (e.g., acetic, benzoic, oxalic) or HCl also work. Also, combinations of these acids such as formic acid and HCl (gaseous), may be used. In addition, surprisingly low levels of ruthenium of the order of 10-20 ppm can achieve in excess of 80% conversion to conjugation. These catalysts can be used at any level, although the conversion of methylene interrupted double bonds to conjugated double bonds decreases in efficiency as lower and lower, levels of catalyst are used based on ruthenium content. Thus, the level of ruthenium as metal should be at least about 5 ppm and not more than about 200 ppm, based on the weight of the oil being treated. A level of about 10-50 ppm ruthenium is preferred and a level of about 10 ppm is most preferred. The level of acid, on the other hand, should be not more than about 4 percent by weight, based on the weight of the oil being treated, with the lower end being determined on a case-by-case basis. The preferred level of acid will be about 0.8 to 2.4 percent by weight. Finally, the reaction must be carried out in the absence of any significant amounts of oxygen Thus, common vegetable oils such as linseed oil may, in accordance with my invention, be conjugated efficiently and economically to produce modified oils having unique drying properties. Stated another way, I have discovered a way to use ruthenium in micro amounts of many forms and states to catalyze this reaction in the presence of acid.

Ruthenium is a unique metal capable of forming many diverse compounds and complexes. A 1373 page treatise, The Chemistry of Ruthenium, by Seddon and Seddon, Elsevier Science Publishers, New York, 1984, attests to this fact. Since so many compounds of ruthenium exhibit catalytic activity with the present invention, it is impossible to test or list all of these compounds. I have therefore set out below examples of classes of ruthenium compounds which may be used in order to illustrate the broad range of possibilities. Therefore, the examples which are presented below should not be construed to limit this invention.

Examples of useful ruthenium complexes are dodecacarbonyl triruthenium, dichlorotris(triphenylphosphene) ruthenium (II) and ruthenium (III) 2, 4-pentanedionate. An example of a useful ruthenium salt is ruthenium trichloride hydrate which is particularly preferred in the practice of this invention. An example of a covalent compound is ruthenium dioxide.

Optimally, it has been found for dodecacarbonyl triruthenium, a 50 ppm ruthenium basis amount of catalyst converted linseed oil to 75% conjugated linolenic acid and 26% conjugated linoleic acid product with a reaction temperature of 180° and a reaction time of 1 hour. with the triphenylphosphene, reaction of the methylene interrupted double bonds had somewhat increased selectivity forming a greater proportion of trans isomers prior to proceeding to conjugation. It was intensely active, producing 85.3% conversion of linolenic acid in three hours with 10 ppm ruthenium basis and 180°. The pentanedionate gave a conversion of 50.7% at 20 ppm and 180° C.

I have found in nearly all cases that when most forms of ruthenium are allowed to come in contact with the substrate under the reaction conditions, they will solubilize into the substrate as homogeneous catalysts or be converted into homogeneous catalysts. Solubilization and activation of the ruthenium is achieved optimally with the use of formic acid. The greatest success is achieved by the presentation of ruthenium to the substrate (linseed oil or organic compound) in monomolecular form. Most organo-ruthenium complexes are soluble in the substrate allowing the dispersal of ruthenium in molecular form. The ruthenium, so dissolved, can then be further reacted and activated into highly active catalysts by formic acid and other acids and alcohols, as discussed above. The action of the formic acid is not fully understood at this time. It may act to reduce the ruthenium complex into dispersed metallic molecular ruthenium.

The only potential catalyst found not to work was ruthenocene, bis(cyclopencadienyl)ruthenium, which is a sandwich compound consisting of ruthenium between two cyclopentadiene rings. This compound had no catalytic activity. The ruthenium in this compound is fully enclosed between the cyclopentadiene rings. Thus, it is not accessible co promote catalysis. Furthermore, ruthenocene was found to be too stable to react with formic acid to form an active catalyst under the conditions of reaction. Thus, other stable ruthenium compounds in which the ruthenium is not accessible would also be excluded from the practice of my invention.

It is preferred in the practice of my invention to use ruthenium trichloride hydrate. This compound is preferred not only because of cost and availability, but also because it has no costly conversion to an organo-ruthenium complex is required. As an example, RuCl₃-hydrate may be solubilized into linseed oil by prior solubilization into alcohols or organic acids such as methanol, ethanol or formic acid. The resulting RuCl₃ solution can then be dispersed and eventually completely dissolving into solution. For example, only 20 ppm of ruthenium as RuCl₃-hydrate was found to be needed to produce a conjugation of 85% of linseed oil. At this rate of usage, the cost of the loss of ruthenium is not prohibitive if it is not recovered, and a commercially viable process is achievable.

Another advantage, gained with the present invention is the production of a product which does not need filtration or any other treatment prior to shipment for use. The color of the oil produced is very light and can, therefore, be used in paint formulations, in inks, in other products typical of conjugated oils, in linoleum manufacture and as intermediates in synthetic chemical reactions.

In some cases conventional antioxidants act to prolong catalyst life and synergistically help promote faster conversion thereby enabling the efficient use of lower amounts of catalyst to achieve conversions to conjugation which would otherwise not be achievable.

The following working examples are given to illustrate the wide range of successful ruthenium compounds which may be used. All of the following reactions were run under argon.

### Example One

Dodecacarbonyl triruthenium was added to' linseed oil on a 50 ppm ruthenium basis [Ru=47.4% of Ru₃(CO)₁₂]. 0.026 grams of Ru₃(CO)₁₂ was added to 250 grams of linseed oil at room temperature. The reaction mixture was heated to 180° C. for a period of one hour-. 2.2 grams of formic acid was added slowly throughout the reaction period in order to help catalyze the double bond migration. The product, analyzed by glc, yielded a conjugated product with 75% C18-3 and 29% C18-2 conjugated. The reaction was allowed to continue to determine the full extent of conjugation that is achievable within a reasonable time. The conjugated C18-3 was 90% in three hours total reaction time. An additional 4.4 grams of formic was added by the end of the reaction.

### Example Two

A reaction similar to the one above was run with 0.010 grams of Ru₃(CO)₁₂ (20 ppm Ru). The conversion for conjugated C18-3 was 55% in one hour, 66% in two hours and 73% in 3 hours. The conjugated C18-2 was 16.9% in one hour, 22.5% in two hours and 26.9% in three hours.

### Example Three

A third reaction was run as above, but with 15 ppm Ru. The conversion was 47.6% conjugated C18-3 and 10.8 conjugated C18-2 for a three hour reaction.

### Example Four (Comparative)

A 5% ruthenium on carbon catalyst was used co produce a 75% conjugated linseed oil. The primary mode of the catalysis used is ruthenium in a monomolecular form, which is then solubilized into the oil to form a homogeneous catalyst. This was shown by taking the final product of this reaction containing 83.1 ppm Ru. This reaction mixture was diluted about one-to-one with fresh unconjugated linseed oil. The resultant mixture contained 29.5% conjugated C18-3 and 5.4% conjugated C18-2. This mixture was heated to 180° C. for one hour with the addition of 2.2 grams of formic acid over the reaction period. The final product was analyzed by glc and found to have 48.3% conjugated C18-3 and 15.5% conjugated C18-2. This proved that the active form of the catalyst is soluble ruthenium metal acting as a homogeneous catalyst. Thus, it appears that almost any method of solubilizing ruthenium metal into a monomolecular form in the oil should work as a catalyst system.

### Example Five

Two reactions were run for three hours each with Dodecacarbonyl triruthenium (20 ppm ruthenium) at 180° C. One reaction had Tenox 20 added in the amount of 0.5%. Samples were taken at hourly intervals. At each step, the reaction with the antioxidant out-performed the reaction without.

| Reaction | Percent C18-3 | Percent C18-2 |
|---|---|---|
| 1 hr w/o antioxidant | 34.6 | 8.1 |
| 1 hr w antioxidant | 58.6 | 10.8 |
| 2 hr w/o antioxidant | 54.8 | 22.6 |
| 2 hr w antioxidant | 68.5 | 23.0 |

### Example Six

A reaction of 250 grams of linseed was allowed to react with 20 ppm ruthenium as ruthenium dichlorotris (triphenylphosphene) with formic acid addition. Conversion of the linolenic acid was 82% in one hour and 97% in three hours. Linoleic acid conversion was 55% in one hour and 90% in three hours.

### Example Seven

A reaction similar to the triphenylphosphene was run with 20 ppm of ruthenium with ruthenium 2,4-pentanedionate. Conversion was not as high with 51% C18-3 in four hours.

### Example Eight

A reaction was run with 20 ppm of ruthenium as ruthenium trichloride hydrate (assay of 41.0% Ru). The reaction temperature was 180° C. -Formic acid was added a drop at a time to 250 grams of bleached linseed oil. Conversion to conjugated oil as measured by the disappearance of linolenic and linoleic acids was 61% C18-3 and 27% C18-2 in one half hour. Conversion went to 88% for C18-3 and 51% for C18-2 in three hours.

### Example Nine

Another reaction with ruthenium trichloride similar to the preceding reaction was run with 100 ppm Ru. Conversion was 49% C18-3 and 14% C18-2 in four hours.

### Example Ten

As a control reaction, 250 grams of linseed oil, prebleached with bleaching earth, was allowed to react with 20 ppm ruthenium as RU₃(CO)₁₂ at 180°C for several hours under an argon atmosphere.

Experimental reactions were run by adding 0.1% by weight of conventional antioxidants. Generally improvement in activity was observed during the first hour of reaction after which the conversions equalized.

| Percent Conversion to Conjugation | | | |
|---|---|---|---|
| Reaction Time | Control | BHA | BHT |
| 1 Hour | 44.0 | 51.5 | 49.3 |
| 2 Hours | 58.6 | 57.9 | 53.4 |

## Claims

1. A catalytic process for conjugating methylene-interrupted double bonds in an organic compound, the process comprising:
solubilizing ruthenium in a methylene-interrupted compound to a level to form a homogenous catalyst; and
reacting the methylene-interrupted organic compound, in the absence of oxygen and in the presence of an acid, with said homogenous catalyst;
wherein the ruthenium used to provide said homogenous catalyst is in the form of an organoruthenium complex, or, a ruthenium salt; and
wherein the level of ruthenium as metal is at least 5 ppm and not more than 200 ppm, based on the weight of the organic compound; and the amount of acid is not more than 4% by weight, based on the weight of the organic compound.

2. A process according to claim 1, wherein the ruthenium used to provide said homogenous catalyst is in the form of dodecacarbonyl triruthenium, dichlorotris (triphenylphosphene) ruthenium (II) or ruthenium (III) 2,4-pentanedionate.

3. A process according to claim 1, wherein the ruthenium used to provide said homogenous catalyst is in the form of ruthenium trichloride hydrate.

4. A process according to any preceding claim, wherein the level of ruthenium as metal is from 10 to 50 ppm, based on the weight of the organic compound.

5. A process according to any preceding claim, wherein the acid is chosen from organic acids and gaseous HCl.

6. A process according to claim 5, wherein the acid is formic acid, or a combination of formic acid and HCl.

7. A process according to any preceding claim, wherein the level of the acid preferably being from 0.8 to 2.4% by weight, based on the weight of the organic compound.

8. A process according to any preceding claim, wherein the organic compound is a common vegetable oil, preferably linseed oil.

9. A process according to any preceding claim, wherein a conventional anti-oxidant is present.

## Patentansprüche

1. Katalytisches Verfahren zur Konjugation von Methylen-getrennten Doppelbindungen in einer organischen Verbindung, wobei das Verfahren umfaßt:
Lösung von Ruthenium in einer Methylen-getrennten Verbindung auf ein Gehalt, um einen homogenen Katalysator zu bilden; und
Reaktion der Methylen-getrennten organischen Verbindung unter Ausschluß von Sauerstoff und in Abwesenheit einer Säure mit dem homogenen Katalysator;
wobei das zur Erzeugung des homogenen Katalysators verwendete Ruthenium in der Form eines Organo-Ruthenium-Komplexes oder eines Ruthenium-Salzes vorliegt; und
wobei der Gehalt des Rutheniums als Metall mindestens 5 ppm und nicht mehr als 200 ppm bezogen auf das Gewicht der organischen Verbindung beträgt; und die Menge der Säure nicht mehr als 4 Gew.-% bezogen auf das Gewicht der organischen Verbindung beträgt.

2. Verfahren nach Anspruch 1, wobei das zur Erzeugung des homogenen Katalysators verwendete Ruthenium in der Form von Dodecacarbonyl-Triruthenium, von Dichlorotris-(Triphenylphosphen)-Ruthenium-(II) oder von Ruthenium-(III)-2,4-Pentandionat vorliegt.

3. Verfahren nach Anspruch 1, wobei das zur Erzeugung des homogenen Katalysators verwendete Ruthenium in der Form von Ruthenium-Trichlorid-Hydrat vorliegt.

4. Verfahren nach einem der vorherigen Ansprüche, wobei der Gehalt des Rutheniums als Metall von 10 bis 50 ppm bezogen auf das Gewicht der organischen Verbindung reicht.

5. Verfahren nach einem der vorherigen Ansprüche, wobei die Säure aus organischen Säuren und gasförmigen HCl gewählt ist.

6. Verfahren nach Anspruch 5, wobei die Säure Formyl-Methansäure oder eine Kombination aus Formyl-Methansäure und HCl ist.

7. Verfahren nach einem der vorherigen Ansprüche, wobei der Gehalt der Säure vorzugsweise zwischen 0,8 bis 2,4 Gew.-% bezogen auf das Gewicht der organischen Verbindung liegt.

8. Verfahren nach einem der vorherigen Ansprüche, wobei die organische Verbindung ein übliches Pflanzenöl, vorzugsweise Leinöl, ist.

9. Verfahren nach einem der vorherigen Ansprüche, wobei ein konventionelles Antioxidans vorhanden ist.

## Revendications

1. Procédé catalytique pour la conjugaison de doubles liaisons interrompues par des fragments méthylène dans un composé organique, ce procédé comprenant :
la solubilisation de ruthénium dans un composé à interruptions méthyléniques à une concentration telle qu'il se forme un catalyseur homogène ; et
la réaction du composé organique à interruptions méthyléniques, en l'absence d'oxygène et en présence d'un acide, avec ledit catalyseur homogène ;
le ruthénium utilisé pour former ledit catalyseur homogène étant sous la forme d'un complexe organique du ruthénium ou d'un sel de ruthénium et
le taux de ruthénium exprimé sous forme métal étant d'au moins 5 ppm et d'au plus 200 ppm par rapport à la masse du composé organique,
et la quantité d'acide n'étant pas supérieure à 4 % en masse, par rapport à la masse du composé organique.

2. Procédé selon la revendication 1, dans lequel le ruthénium utilisé pour fournir ledit catalyseur homogène est sous la forme de dodécacarbonyle triruthénium, de dichlorotris(triphénylphosphène)ruthénium (II) ou de pentane-2,4-dionate de ruthénium (III).

3. Procédé selon la revendication 1, dans lequel le ruthénium utilisé pour fournir ledit catalyseur homogène est sous la forme d'hydrate de trichlorure de ruthénium.

4. Procédé selon une quelconque des revendications précédentes, dans lequel le taux de ruthénium exprimé sous forme métal est de 10 à 50 ppm par rapport à la masse du composé organique.

5. Procédé selon une quelconque des revendications précédentes, dans lequel l'acide est choisi parmi les acides organiques et HCl gazeux.

6. Procédé selon la revendication 5, dans lequel l'acide est l'acide formique, ou une combinaison d'acide formique et d'HCl.

7. Procédé selon une quelconque des revendications précédentes, dans lequel le taux d'acide est de préférence de 0,8 à 2,4 % en masse, par rapport à la masse du composé organique.

8. Procédé selon une quelconque des revendications précédentes, dans lequel le composé organique est une huile végétale courante, de préférence de l'huile de lin.

9. Procédé selon une quelconque des revendications précédentes, dans lequel un antioxydant classique est présent.
